# EUROPÄISCHE PATENTANMELDUNG

(11) **EP 1 671 848 A2**
(43) Veröffentlichungstag der Anmeldung: **21.06.2006**
(21) Anmeldenummer: 05026726.9
(22) Anmeldetag: 07.12.2005
(51) Int. Cl.: B60R 16/02, G09G 3/20, B60P 3/32, G01D 7/00, G01C 21/26

(54) **Anzeigevorrichtung zur Verwendung in Wohnmobilen, Wohnwagen und Fahrer- und Wohnkabinen von Lastkraftwagen**

(30) Priorität: 17.12.2004 DE 202004019491 U; 26.01.2005 DE 202005001259 U
(71) Anmelder: Reich KG, Regel- und Sicherheitstechnik, 35713 Eschenburg-Wissenbach (DE)
(72) Erfinder: Bender, Steffen, 35713 Eschenburg-Wissenbach (DE)
(74) Vertreter: Hofstetter, Alfons J.

(57) **Zusammenfassung**

Die vorliegende Erfindung betrifft eine Anzeigevorrichtung zur Verwendung in Wohnmobilen, Wohnwagen und Fahrer- und Wohnkabinen von Lastkraftwagen mit mindestens einer Anzeigefläche (12) und mindestens einem Bedienungselement (14) zur Eingabe von Start- und Zielkoordinaten und zur Auswahl der Anzeige und/oder zur Eingabe mindestens eines Datenwerts, wobei der Datenwert mindestens einen zeitlich vorhergehenden, aktuellen oder gewünschten Betriebszustand von Elementen oder Umgebungsparametern inner- oder außerhalb des Wohnmobils, Wohnwagens oder Lastkraftwagens darstellt, wobei die Anzeigevorrichtung (10) in datenübertragender Weise lösbar oder nicht-lösbar mit einem Anschlusskontakt (18) mindestens einer Anschlussvorrichtung (16) verbunden ist und mindestens eine Speichereinheit zum Speichern von Daten und Software aufweist und programmierbar ausgebildet ist, wobei die Anschlussvorrichtung (16) in datenübertragender Weise mit mindestens einer Vorrichtung zum Anschluss von Stromquellen und elektrischen Verbrauchern (20) in dem Wohnmobil, Wohnwagen oder der Fahrer- und Wohnkabine des Lastkraftwagens verbunden ist, wobei die Anzeigevorrichtung (10) ein Navigationssystem und/oder einen Routenplaner zur Zielführung des Wohnmobils, Wohnwagens oder Lastkraftwagens und zur Routenberechnung aufweist.

## Beschreibung

Die vorliegende Erfindung betrifft eine Anzeigevorrichtung zur Verwendung in Wohnmobilen, Wohnwagen und Fahrer- und Wohnkabinen von Lastkraftwagen mit mindestens einer Anzeigefläche und mindestens einem Bedienungselement zur Auswahl der Anzeige und/oder zur Eingabe mindestens eines Datenwerts, wobei der Datenwert mindestens einen zeitlich vorhergehenden, aktuellen oder gewünschten Betriebszustand von Elementen oder Umgebungsparametern inner- oder außerhalb des Wohnmobils oder Wohnwagens darstellt, wobei die Anzeigevorrichtung in datenübertragender Weise lösbar mit einem Anschlusskontakt mindestens einer Anschlussvorrichtung verbunden ist und mindestens eine Speichereinheit zum Speichern von Daten und Software aufweist und programmierbar ausgebildet ist, wobei die Anschlussvorrichtung in datenübertragender Weise mit mindestens einer Vorrichtung zum Anschluss von Stromquellen und elektrischen Verbrauchern in dem Wohnmobil, Wohnwagen oder der Fahrer- und Wohnkabine von Lastkraftwagen verbunden ist.

Eine derartige Anzeigevorrichtung ist aus der EP 1 385 137 A2 bekannt und dient zur Anzeige von Betriebszuständen in Wohnmobilen und Wohnwagen, zum Beispiel zur Überprüfung des Ladezustandes von Batterien, der Überwachung der Prüfstände diverser Flüssigkeitstanks, zur Anzeige der Innen- und Außentemperatur oder auch zur Anzeige weiterer Werte und Daten, die über übliche Sensoren ermittelt werden.

Die bekannten Anzeigevorrichtungen weisen jedoch den Nachteil auf, dass weitere Umgebungsparameter beziehungsweise Parameter, die sich auf Positionsbestimmungen des Wohnwagens oder Wohnmobils nicht abgerufen werden können.

Es ist daher Aufgabe der vorliegenden Erfindung, eine Anzeigevorrichtung der eingangs genannten Art bereitzustellen, welche einen einfachen und jederzeitigen Zugriff auf alle relevanten Daten von Betriebszuständen von Elementen oder Umgebungsparametern inner- oder außerhalb des Wohnmobils, Wohnwagens oder von Fahrer- und Wohnkabinen von Lastkraftwagen, insbesondere auch Parameter, die sich auf Positionsbestimmungen des Wohnwagens, Wohnmobils oder Lastkraftwagens beziehen, gewährleistet.

Zur Lösung dieser Aufgabe dienen die Merkmale des unabhängigen Anspruches.

Vorteilhafte Ausgestaltungen sind in den Unteransprüchen beschrieben.

Eine erfindungsgemäße Anzeigevorrichtung weist vorteilhafterweise mindestens ein Bedienungselement zur Eingabe von Start- und Zielkoordinaten sowie ein Navigationssystem und/oder einen Routenplaner zur Zielführung des Wohnmobils, Wohnwagens oder von Lastkraftwagen und zur Routenberechnung auf. Damit ist es möglich, neben Daten von Betriebszuständen von Elementen oder Umgebungsparametern inner- oder außerhalb des Wohnmobils, Wohnwagens oder der Fahrer- und Wohnkabine eines Lastkraftwagens, auch Parameter, die sich auf Positionsbestimmungen des Wohnwagens, Wohnmobils oder Lastkraftwagens beziehen, abzurufen oder abzuspeichern. Des Weiteren ist die Anzeigevorrichtung in datenübertragender Weise mit einem Anschlusskontakt mindestens einer Anschlussvorrichtung lösbar verbunden, wobei die Anschlussvorrichtung in datenübertragender Weise mit mindestens einer Vorrichtung zum Anschluss von Stromquellen und elektrischen Verbrauchern in dem Wohnmobil, Wohnwagen oder Lastkraftwagen verbunden ist. Durch die lösbare Verbindung der Anzeigevorrichtung mit mindestens einem Anschlusskontakt einer Anschlussvorrichtung ist gewährleistet, dass inner- oder außerhalb des Wohnmobils, Wohnwagens oder Lastkraftwagens jeweils an geeigneter Stelle eine entsprechende Anschlussvorrichtung angeordnet werden kann, über die dann die Anzeigevorrichtung betätig wird. Insbesondere ist es möglich, im Bereich der Fahrerkonsole eine Anschlussvorrichtung für die Anzeigevorrichtung anzubringen. Da die Anschlussvorrichtung bzw. die Anschlussvorrichtungen mit einer oder mehreren zentralen Vorrichtungen zum Anschluss der Stromquellen und der elektrischen Verbraucher des Wohnmobils, Wohnwagens oder Lastkraftwagens verbunden ist, kann auf die bisher üblichen Anzeigevorrichtungen, die jeweils nur eine begrenzte Anzahl von Betriebszuständen oder Parametern angezeigt haben und die darüber hinaus innerhalb des Wohnmobils, Wohnwagens oder der Fahrer- und Wohnkabine eines Lastkraftwagens an unterschiedlichen Stellen angebracht wurden, verzichtet werden. Es ist aus Bequemlichkeitsgründen aber auch möglich, mehrere Anschlussvorrichtungen in oder am Wohnmobil oder Wohnwagen anzubringen, die jeweils mit der Anzeigevorrichtung den Zugriff auf alle relevanten Daten des Wohnmobils oder Wohnwagens erlauben. Die Anschlussvorrichtungen müssen dabei jeweils nur mit der oder den Vorrichtungen zum Anschluss von Stromquellen und elektrischen Verbrauchern in Daten übertragender Weise verbunden werden.

Das Navigationssystem und/oder der Routenplaner kann dabei eine Vorrichtung zur Erfassung der Position des Wohnmobils, Wohnwagens oder Lastkraftwagens aufweisen, wobei in einer Speichereinheit der erfindungsgemäßen Anzeigevorrichtung Karteninformationen und Weginformationen gespeichert sind. Die Vorrichtung zur Erfassung der Position des Wohnmobils, Wohnwagens oder Lastkraftwagens besteht üblicherweise aus einem GPS. Die Speichereinheit kann aus mindestens einer in der Anzeigevorrichtung angeordneten Festplatte und/oder mindestens einem transportablen Speichermedium mit mindestens einer entsprechenden Datenlese- und/oder -schreibeinheit bestehen. Als transportables Speichermedium kann eine DVD, eine CD-ROM, eine Speicherkarte oder ein Memory-Stick verwendet werden.

In einer vorteilhaften Ausgestaltung der Erfindung weist die Anzeigevorrichtung eine Sprachausgabeeinheit auf. Damit ist es möglich, dass der Fahrer beziehungsweise der Benutzer des Wohnmobils, Wohnwagens oder Lastkraftwagens sicher auf der durch das Navigationssystem berechneten Route geführt wird, ohne dass seine Aufmerksamkeit während des Fahrvorgangs beeinträchtigt wird. Das Bedienungselement kann eine Tastatur umfassen.

In einer vorteilhaften Ausgestaltung der Erfindung ist die Verbindung der Anzeigevorrichtung mit der Anschlussvorrichtung als Steckverbindung ausgebildet. Dadurch ist gewährleistet, dass die Verbindung jederzeit lösbar ist und zugleich während der Verbindung der genannten Elemente ein sicherer Kontakt zwischen diesen besteht.

In einer weiteren vorteilhaften Ausgestaltung der Erfindung weisen die Anzeigevorrichtung und/oder die Anschlussvorrichtung und/oder die Vorrichtung zum Anschluss von Stromquellen und elektrischen Verbrauchern jeweils eine Sende- und/oder Empfangseinheit zur Übertragung und/oder zum Empfang von Daten auf. Dadurch ist es vorteilhafterweise möglich, auch ohne den direkten Kontakt zwischen der Anschlussvorrichtung, der Anzeigevorrichtung und/oder der Vorrichtung zum Anschluss von Stromquellen und elektrischen Verbrauchern, Daten auszutauschen. Dies bedeutet, dass die Betriebszustände oder andere Parameter auch außerhalb des Wohnmobils, Wohnwagens oder Lastkraftwagens jederzeit abrufbar und eingebbar beziehungsweise bestimmbar sind. Hierzu ist die Anzeigevorrichtung vorteilhafterweise tragbar ausgebildet. Die Anzeigevorrichtung kann dabei auch aus einem Laptop-Computer, einem PDA-Computer, einem Palm-Computer, einem Handheld-Computer, einem Organizer oder einem tragbaren Telefon bestehen. Zudem kann gegebenenfalls auf eine aufwendige Verkabelung der Anschlussvorrichtungen im Wohnmobil, Wohnwagen oder Lastkraftwagen verzichtet werden. Hierbei ist es auch möglich, dass die Anschlussvorrichtung in der Anzeigevorrichtung integriert ausgebildet ist. Die Anzeigefläche der Anzeigevorrichtung ist dabei vorteilhafterweise ein LCD-Bildschirm.

In einer weiteren vorteilhaften Ausgestaltung der Erfindung ist die Anzeigevorrichtung drehbar befestigbar. Dadurch ist es möglich, die Anzeigevorrichtung und damit die Anzeigefläche in jeder beliebigen Stellung, vorzugsweise horizontal oder vertikal, anzuordnen. Dabei ist die Richtung bzw. Orientierung der auf der Anzeigefläche dargestellten Werte, Daten, Graphiken etc. ebenfalls frei wählbar.

In einer weiteren vorteilhaften Ausgestaltung der Erfindung ist das Bedienungselement der Anzeigevorrichtung als multifunktioneller Dreh-/Drückschalter ausgebildet. Durch ein derart ausgestaltetes Bedienungselement ist eine leichte Bedienung der Anzeigevorrichtung möglich. Zudem können mit einem derartigen Bedienungselement alle Funktionen der Anzeigevorrichtung durchgeführt werden.

In einer weiteren vorteilhaften Ausgestaltung der Erfindung ist bei einer Trennung von Anzeigevorrichtung und Anschlussvorrichtung die Vorrichtung zum Anschluss von Stromquellen und elektrischen Verbrauchern in dem Wohnmobil oder Wohnwagen nicht aktivierbar. Es ist auch möglich, dass die Anzeigevorrichtung über die Vorrichtung zum Anschluss von Stromquellen und elektrischen Verbrauchern mit einer Wegfahrsperre des Wohnmobils oder Lastkraftwagens verbunden ist. Durch derartige Ausgestaltungen ist ein wirksamer Diebstahlschutz verwirklicht.

In einer weiteren vorteilhaften Ausgestaltung der Erfindung erzeugt die Anzeigevorrichtung bei einem Über- oder Unterschreiten vorbestimmter Datenwerte, die einen kritischen Betriebszustand von Elementen oder Umgebungsparametern inner- oder außerhalb des Wohnmobils, Wohnwagens oder Lastkraftwagens darstellen, ein akustisches oder optisches Warnsignal.

In einer weiteren vorteilhaften Ausgestaltung der Erfindung weist die Anzeigevorrichtung einen Radio und/oder ein DVD-/CD-Abspielgerät und/oder einen mp3-Player auf. Zudem ist es möglich, dass das Navigationssystem einen elektronischen Kompass umfasst.

Weitere Einzelheiten, Merkmale und Vorteile der Erfindung ergeben sich aus der folgenden Beschreibung eines zeichnerisch dargestellten Ausführungsbeispiels.

### Es zeigen

- Figur 1: eine schematische Darstellung einer erfindungsgemäßen Anzeigevorrichtung, und
- Figur 2: eine weitere schematische Darstellung der erfindungsgemäßen Anzeigevorrichtung.

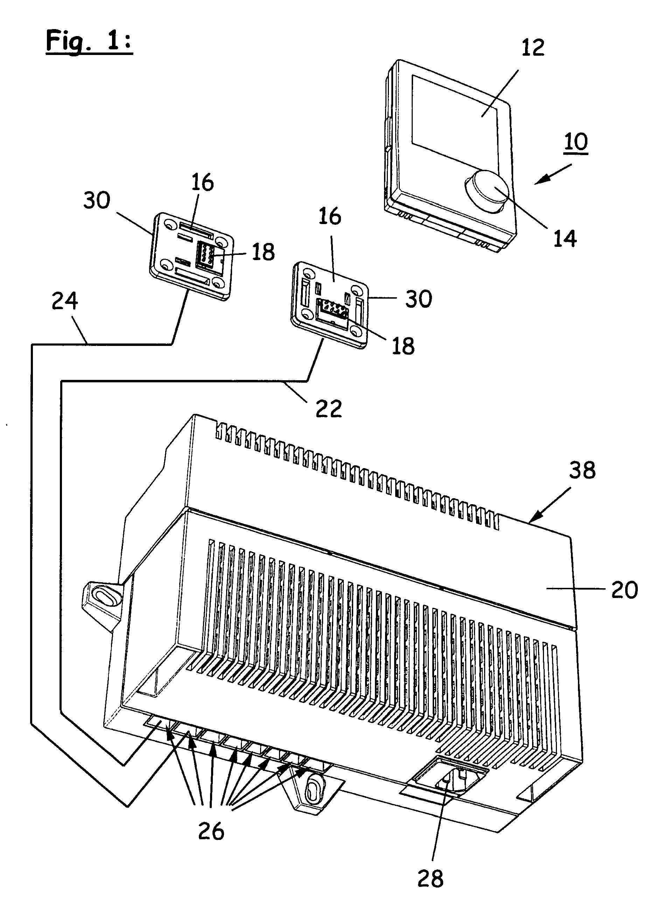

Figur 1 zeigt eine Anzeigevorrichtung 10 zur Verwendung in Wohnmobilen, Wohnwagen und Fahrer- und Wohnkabinen von Lastkraftwagen. Die Anzeigevorrichtung 10 weist eine Anzeigefläche 12 bestehend aus einem LCD-Bildschirm sowie ein Bedienungselement 14 zur Auswahl der Anzeige und/oder zur Eingabe mindestens eines Datenwerts, wobei der Datenwert mindestens einen zeitlich vorhergehenden, aktuellen oder gewünschten Betriebszustand von Elementen oder Umgebungsparametern inner- oder außerhalb des Wohnmobils, Wohnwagens oder Lastkraftwagens darstellt. Das Bedienungselement 14 ist dabei als multifunktioneller Dreh-/Drückschalter ausgebildet.

Des Weiteren erkennt man, dass die Anzeigevorrichtung 10 lösbar mit einem jeweiligen Anschlusskontakt 18 der beiden dargestellten Anschlussvorrichtungen 16 in datenübertragender Weise verbunden ist. Zudem ist es möglich, die Anzeigevorrichtung drehbar zu befestigen. Die Anschlussvorrichtungen 16 sind dabei als Anschlussplatte 30 ausgebildet. Die Anschlussplatte 30 ist in das Gehäuse der Anzeigevorrichtung 10, insbesondere auf der der Anzeigefläche 12 gegenüberliegenden Seite des Gehäuses einsteckbar. Man erkennt, dass die Anschlussvorrichtungen 16 jeweils in datenübertragender Weise über Anschlussleitungen 23, 24 mit einer Vorrichtung 20 zum Anschluss von Stromquellen und elektrischen Verbrauchern in dem Wohnmobil, Wohnwagen oder der Fahrer- und Wohnkabine des Lastkraftwagens verbunden sind. Hierzu weist die Vorrichtung 20 Anschlüsse 26 auf, die als Ein- und Ausgänge für verschiedene Anschlussleitungen, wie zum Beispiel den Anschlussleitungen 22, 24 dienen. Es ist aber auch möglich, dass die Anschlüsse 26 zum Anschluss verschiedener Sensoren, wie zum Beispiel für Sensoren zum Messen von Tankinhalten, Gassensoren, Temperatursensoren, Drucksensoren oder Ähnliches verwendet werden.

Zur Stromversorgung weist die Vorrichtung 20 einen Anschluss 28 auf. Man erkennt, dass das Gehäuse 20 des Weiteren eine Vielzahl von Lüftungsschlitzen aufweist, die zur Vermeidung der Überhitzung der Vorrichtung 20 dienen.

Die Anschlussvorrichtungen 16 können jeder beliebigen Stelle innerhalb oder außerhalb des Wohnmobils oder Wohnwagens angeordnet werden. Insbesondere wird eine Anschlussvorrichtung 16 im Bereich der Fahrerkonsole des Wohnmobils oder Lastkraftwagens angeordnet, so dass der Fahrer des Wohnmobils oder Lastkraftwagens jederzeit in der Lage ist, Daten über die Betriebszustände oder andere Parameter in und außerhalb des Wohnmobils oder Lastkraftwagens abzurufen. Die Verbindung der Anzeigevorrichtung 10 mit den jeweiligen Anschlussvorrichtungen 16 ist als Steckverbindung ausgebildet. Des Weiteren ist es möglich, dass die Anzeigevorrichtung 10, die Anschlussvorrichtung 16 und/oder die Vorrichtung 20 jeweils eine Sende- und/oder Empfangseinheit zur Übertragung und/oder zum Empfang von Daten aufweisen.

Die dargestellte Anzeigevorrichtung ist tragbar ausgebildet. Es ist zudem möglich, dass die Anzeigevorrichtung 10 ein Laptop-Computer, ein PDA-Computer, ein Palm-Computer, ein Handheld-Computer, ein Organzier oder ein tragbares Telefon ist. Schließlich weist die dargestellte Anzeigevorrichtung 10 eine Speichereinheit (nicht dargestellt) zum Speichern von Daten auf. Zudem ist sie programmierbar ausgebildet. Dadurch ist es möglich, einerseits Daten zu Speichern und andererseits diese auszuwerten und auch graphisch auf der Anzeigefläche 12 darzustellen.

Die Anzeigevorrichtung 10 kann zudem derart ausgebildet sein, dass bei einer Trennung von Anzeigevorrichtung 10 und Anschlussvorrichtung 16 die Vorrichtung 20 nicht aktivierbar ist. Die Anzeigevorrichtung 10 kann aber auch über die Vorrichtung 20 mit einer Wegfahrsperre (nicht dargestellt) des Wohnmobils oder Lastkraftwagens verbunden sein. Zudem kann die Anzeigevorrichtung 10 derart ausgebildet sein, dass bei einem Über- oder Unterschreiten vorbestimmter Datenwerte, die einen kritischen Betriebszustand von Elementen oder Umgebungsparametern inner- oder außerhalb des Wohnmobils, Wohnwagens oder der Fahrer- und Wohnkabine des Lastkraftwagens darstellen, ein akustisches oder optisches Warnsignal erzeugt wird.

Die Anschlussvorrichtung 16 kann auch in der Anzeigevorrichtung 10 integriert ausgebildet sein (nicht dargestellt).

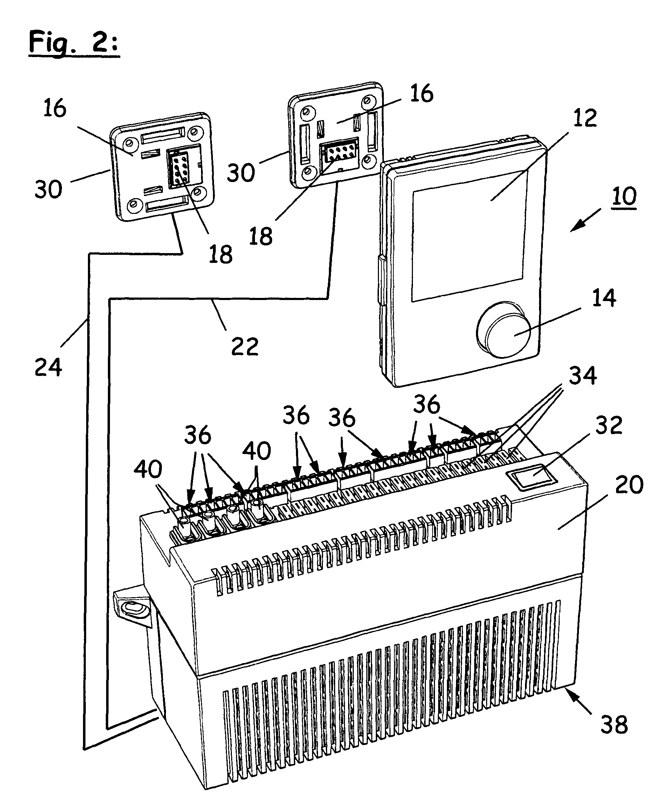

Figur 2 zeigt eine weitere schematische Darstellung der Anzeigevorrichtung 10. Man erkennt, dass die Vorrichtung 20 weitere Anschlussstellen 36 aufweist. Die Anschlussstellen 36 können dabei als Anschlüsse bzw. Ein- und Ausgänge für alle stromverbrauchenden Elemente eines Wohnmobils, Wohnwagens oder der Fahrer- und Wohnkabine des Lastkraftwagens dienen. Insbesondere dienen sie als Anschlüsse für sogenannte 12 V-Verbraucher, wie zum Beispiel Lichtanlagen, Kühlschränke, Fernseher, Radios und Ähnliches. Zudem weist die Vorrichtung 20 Anschlüsse 40 zum Anschluss von mindestens zwei Batterien auf. Zur Sicherung der einzelnen Stromkreise ist zudem eine Sicherungssteckleiste 34 zum Einfügen entsprechender Sicherungen ausgebildet. Zum Ein- bzw. Ausschalten der Vorrichtung 20 dient ein Schalter 32.

## Patentansprüche

1. Anzeigevorrichtung zur Verwendung in Wohnmobilen, Wohnwagen und Fahrer- und Wohnkabinen von Lastkraftwagen mit mindestens einer Anzeigefläche (12) und mindestens einem Bedienungselement (14) zur Eingabe von Start- und Zielkoordinaten und zur Auswahl der Anzeige und/oder zur Eingabe mindestens eines Datenwerts, wobei der Datenwert mindestens einen zeitlich vorhergehenden, aktuellen oder gewünschten Betriebszustand von Elementen oder Umgebungsparametern inner- oder außerhalb des Wohnmobils, Wohnwagens oder Lastkraftwagens darstellt, wobei die Anzeigevorrichtung (10) in datenübertragender Weise lösbar oder nicht-lösbar mit einem Anschlusskontakt (18) mindestens einer Anschlussvorrichtung (16) verbunden ist und mindestens eine Speichereinheit zum Speichern von Daten und Software aufweist und programmierbar ausgebildet ist, wobei die Anschlussvorrichtung (16) in datenübertragender Weise mit mindestens einer Vorrichtung zum Anschluss von Stromquellen und elektrischen Verbrauchern (20) in dem Wohnmobil, Wohnwagen oder der Fahrer- und Wohnkabine des Lastkraftwagens verbunden ist, wobei die Anzeigevorrichtung (10) ein Navigationssystem und/oder einen Routenplaner zur Zielführung des Wohnmobils, Wohnwagens oder Lastkraftwagens und zur Routenberechnung aufweist.

2. Anzeigevorrichtung nach Anspruch 1,
**dadurch gekennzeichnet,**
**dass** das Navigationssystem und/oder der Routenplaner eine Vorrichtung zur Erfassung der Position des Wohnmobils, Wohnwagens oder Lastkraftwagens aufweist und in der Speichereinheit Karteninformationen und Weginformationen gespeichert sind.

3. Anzeigevorrichtung nach Anspruch 2,
**dadurch gekennzeichnet,**
**dass** die Vorrichtung zur Erfassung der Position des Wohnmobils, Wohnwagens oder Lastkraftwagens aus einem GPS besteht.

4. Anzeigevorrichtung nach einem der vorhergehenden Ansprüche,
**dadurch gekennzeichnet,**
**dass** die Speichereinheit aus mindestens einer in der Anzeigevorrichtung (10) angeordneten Festplatte und/oder mindestens einem transportablen Speichermedium mit mindestens einer entsprechenden Datenlese- und/oder -schreibeinheit besteht.

5. Anzeigevorrichtung nach Anspruch 4,
**dadurch gekennzeichnet,**
**dass** das transportable Speichermedium eine DVD, eine CD-ROM, eine Speicherkarte oder ein Memory-Stick ist.

6. Anzeigevorrichtung nach einem der vorhergehenden Ansprüche,
**dadurch gekennzeichnet,**
**dass** die Anzeigevorrichtung (10) eine Sprachausgabeeinheit aufweist.

7. Anzeigevorrichtung nach einem der vorhergehenden Ansprüche,
**dadurch gekennzeichnet,**
**dass** das Bedienungselement (14) eine Tastatur umfasst.

8. Anzeigevorrichtung nach einem der vorhergehenden Ansprüche,
**dadurch gekennzeichnet,**
**dass** mindestens zwei Anschlussvorrichtungen (16) in oder am Wohnmobil, Wohnwagen oder der Fahrer- und Wohnkabine des Lastkraftwagens ausgebildet sind.

9. Anzeigevorrichtung nach einem der vorhergehenden Ansprüche,
**dadurch gekennzeichnet,**
**dass** die Verbindung der Anzeigevorrichtung (10) mit der Anschlussvorrichtung (16) als Steckverbindung ausgebildet ist.

10. Anzeigevorrichtung nach einem der Ansprüche 1 bis 8,
**dadurch gekennzeichnet,**
**dass** die Anschlussvorrichtung (16) in der Anzeigevorrichtung (10) integriert ausgebildet ist.

11. Anzeigevorrichtung nach einem der vorhergehenden Ansprüche,
**dadurch gekennzeichnet,**
**dass** die Anzeigevorrichtung (10) und/oder die Anschlussvorrichtung (16) und/oder die Vorrichtung (20) jeweils eine Sende- und/oder Empfangseinheit zur Übertragung und/oder zum Empfang von Daten aufweisen, wobei die Daten mindestens einen zeitlich vorhergehenden, aktuellen oder gewünschten Betriebszustand von Elementen oder Umgebungsparametern inner- oder außerhalb des Wohnmobils, Wohnwagens oder der Fahrer- und Wohnkabine des Lastkraftwagens darstellen.

12. Anzeigevorrichtung nach einem der vorhergehenden Ansprüche,
**dadurch gekennzeichnet,**
**dass** die Anzeigevorrichtung (10) tragbar ausgebildet ist.

13. Anzeigevorrichtung nach einem der vorhergehenden Ansprüche,
**dadurch gekennzeichnet,**
**dass** die Anzeigefläche (12) ein LCD-Bildschirm ist.

14. Anzeigevorrichtung nach einem der vorhergehenden Ansprüche,
**dadurch gekennzeichnet,**
**dass** die Anzeigevorrichtung (10) ein Laptop-Computer, ein PDA-Computer, ein Palm-Computer, ein Handheld-Computer, ein Organizer oder ein tragbares Telefon ist.

15. Anzeigevorrichtung nach einem der vorhergehenden Ansprüche,
**dadurch gekennzeichnet,**
**dass** die Anzeigevorrichtung (10) drehbar befestigbar ist.

16. Anzeigevorrichtung nach einem der vorhergehenden Ansprüche,
**dadurch gekennzeichnet,**
**dass** das Bedienungselement (14) als multifunktioneller Dreh-/Drückschalter ausgebildet ist.

17. Anzeigevorrichtung nach einem der vorhergehenden Ansprüche,
**dadurch gekennzeichnet,**
**dass** bei einer Trennung von Anzeigevorrichtung (10) und Anschlussvorrichtung (16) die Vorrichtung (20) nicht aktivierbar ist.

18. Anzeigevorrichtung nach einem der vorhergehenden Ansprüche,
**dadurch gekennzeichnet,**
**dass** die Anzeigevorrichtung (10) über die Vorrichtung (20) mit einer Wegfahrsperre des Wohnmobils oder Lastkraftwagens verbunden ist.

19. Anzeigevorrichtung nach einem der vorhergehenden Ansprüche,
**dadurch gekennzeichnet,**
**dass** die Anzeigevorrichtung (10) bei einem Über- oder Unterschreiten vorbestimmter Datenwerte, die einen kritischen Betriebszustand von Elementen oder Umgebungsparametern inner- oder außerhalb des Wohnmobils, Wohnwagens oder der Fahrer- und Wohnkabine des Lastkraftwagens darstellen, ein akustisches oder optisches Warnsignal erzeugt.

20. Anzeigevorrichtung nach einem der vorhergehenden Ansprüche,
**dadurch gekennzeichnet,**
**dass** die Anzeigevorrichtung (10) einen Radio und/oder ein DVD-/CD-Abspielgerät und/oder einen mp3-Player aufweist.

21. Anzeigevorrichtung nach einem der vorhergehenden Ansprüche,
**dadurch gekennzeichnet,**
**dass** das Navigationssystem einen elektronischen Kompass aufweist.
